**Europäisches Patentamt**

**European Patent Office**

**Office européen des brevets**

(19)

(11) Veröffentlichungsnummer : **0 119 227**
**B1**

# EUROPÄISCHE PATENTSCHRIFT

(12)

(45) Veröffentlichungstag der Patentschrift :
**20.01.88**

(21) Anmeldenummer : **83902889.1**

(22) Anmeldetag : **12.09.83**

(86) Internationale Anmeldenummer :
**PCT/EP 83/00238**

(87) Internationale Veröffentlichungsnummer :
**WO/8400939 (15.03.84 Gazette 84/07)**

(51) Int. Cl.⁴ : **B 64 F   1/34**

(54) **VERSORGUNGSANLAGE FÜR DIE LUFT- UND RAUMFAHRT.**

(30) Priorität : **10.09.82 DE 3233567**

(43) Veröffentlichungstag der Anmeldung :
**26.09.84 Patentblatt 84/39**

(45) Bekanntmachung des Hinweises auf die Patenterteilung : **20.01.88 Patentblatt 88/03**

(84) Benannte Vertragsstaaten :
**AT BE CH DE FR GB LI LU NL SE**

(56) Entgegenhaltungen :
**FR-A- 1 473 215**
**US-A- 4 101 100**
**Technische Rundschau, Band 69, Nr. 5, 1. Februar 1977, Hallwag Verlag, Bern (CH), L. Spengler: "Flugzeug-Stromversorgungsanlage", Seite 13**

(73) Patentinhaber : **JUNG, Bernd**
**Dieselstrasse 22**
**D-6352 Ober-Mörlen (DE)**

(72) Erfinder : **JUNG, Bernd**
**Dieselstrasse 22**
**D-6352 Ober-Mörlen (DE)**

(74) Vertreter : **Stoffregen, Hans-Herbert, Dr. Dipl.-Phys. et al**
**Patentanwälte Strasse & Stoffregen Salzstrasse 11a**
**Postfach 2144**
**D-6450 Hanau/Main 1 (DE)**

## Beschreibung

Die Erfindung betrifft eine Luft- und Raumfahrt-Versorgungsanlage zur wahlweisen Verfügungstellung von Druckluft zur Verwendung als Startluft und gegebenenfalls elektrischer Energie, wobei die Druckluft mittels zumindest eines von einem Verbrennungsmotor betätigten Verdichters erzeugbar ist.

Eine stationäre Luft- und Raumfahrt-Versorgungsanlage ist zum Beispiel der US-A-41 01 100 zu entnehmen. Über Versorgungsleitungen werden mobilen Einheiten Druckluft und elektrische Energie zugefuhrt, die dann zur Versorgung eines Flugzeuges abgegeben wird. Die Druckluft wird mittels eines Schraubenkompressors erzeugt. Dieser muß recht voluminös ausgebildet sein, um den erforderlichen Massendurchsatz bei benötigtem Druck zur Verfügung zu stellen. Die elektrische Energie selbst wird dem elektrischen Versorgungsnetz entnommen, die dann in die erforderliche Spannung transformiert bzw. in die erforderliche Frequenz umgesetzt wird. Entsprechende Anlagen sind konstruktiv aufwendig und damit wartungsintensiv. Daher ist ein Einsatz zum Beispiel auf kleineren von Düsenmaschinen angeflogenen Flughäfen oder auf Flugplätzen der Dritten Welt nicht oder nur schwer einsetzbar. Aus diesem Grund ist es erforderlich, daß die Düsenflugzeuge entweder installierte Versorgungsanlagen selbst aufweisen oder aber mobile Geräte mitführen, was sich allein aus Kostengründen nachteilig auswirkt. Aber es ist noch auf einen weiteren Nachteil hinzuweisen. Ist nämlich ein entsprechendes an Bord befindliches Anlaßgerät defekt, so muß ein Ersatzgerät eingeflogen werden, da sonst die Maschine festsitzt.

In der FR-A-1 473 215 wird eine mobile Anlage zur Erzeugung von elektrischer Energie und Druckluft beschrieben. Über Keilriemen ist der Motor mit dem Verdichter und dem Generator verbunden. Die Drehzahl des Generators kann dabei nicht unabhängig von der des Verdichters eingestellt werden. Bei dem Verdichter selbst handelt es sich um einen Kolbenverdichter, dessen Druckluft weder öl- noch pulsationsfrei ist. Mit einem Kolbenverdichter ist außerdem nicht möglich, die erforderlichen Mengen an Startluft zu erzeugen, es sei denn, daß man den Kolbenkompressor in einer Größe von in etwa einem Einfamilienhaus baut. Dann wäre die Anlage jedoch nicht mehr mobil.

Eine der FR-A-1 473 215 entsprechende Anlage ist daher nicht für die Versorgung für Maschinen der Luft- und Raumfahrt bestimmt. Vielmehr handelt es sich hier um eine übliche Arbeitsmaschine, die z. B. bei Straßenarbeiten benutzt wird. Auch besteht die Möglichkeit, mit einer entsprechenden mobilen Maschine Beton im erforderlichen Umfang zu rütteln.

Aufgabe der vorliegenden Erfindung ist es, eine Versorgungsanlage der zuvor beschriebenen Art so auszubilden, daß die Möglichkeit besteht, im erforderlichen Umfang kostengünstig elektrische Energie und gegebenenfalls Druckluft zu erzeugen, wobei der Verdichter einen den Einsatzzweck entsprechenden Massendurchsatz gewährleistet und die Druckluft öl- und pulsationsfrei ist.

Die Aufgabe wird erfindungsgemäß zum einen dadurch gelöst, daß der Motor ein Dieselmotor ist, durch den ein Generator und wahlweise der als Radial- oder Axialverdichter ausgebildete Verdichter antreibbar ist, wobei die Drehzahl des Generators unabhängig von der des Verdichters einstellbar ist.

Ausgestaltungen ergeben sich aus den Merkmalen der Unteransprüche 2 bis 10. Weitere Lösungen der der Erfindung zugrundeliegenden Aufgabenstellung ergeben sich aus den nebengeordneten Ansprüche 11 und 12.

Die Erfindung wird nachstehend anhand von in der Zeichnung dargestellten bevorzugten Ausführungsbeispielen näher erläutert.

Es zeigen :

Fig. 1 eine erste Ausführungsform einer erfindungsgemäßen Versorgungsanlage und

Fig. 2 eine zweite Ausführungsform einer erfindungsgemäßen Versorgungsanlage.

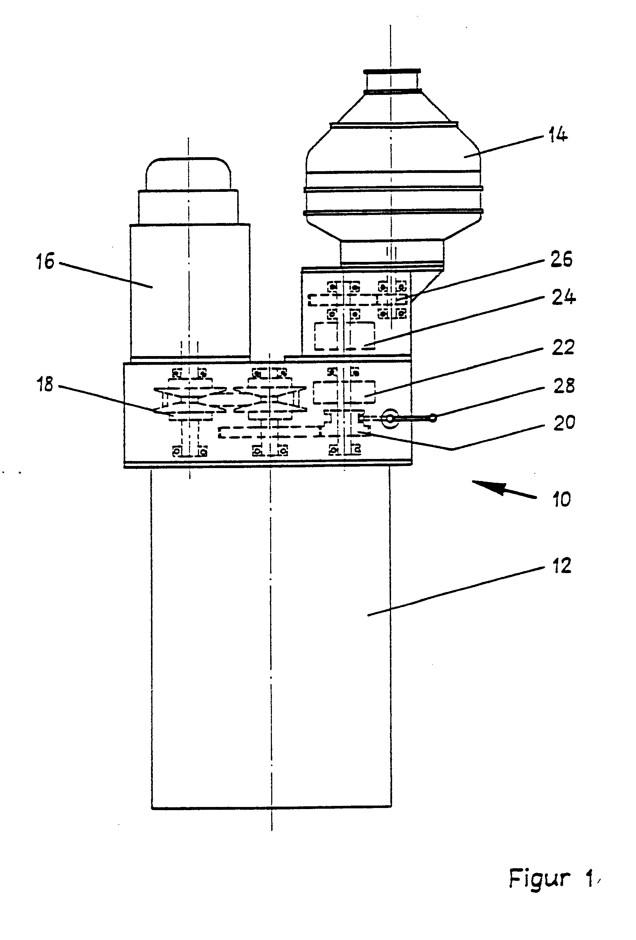

In Fig. 1 ist in schematischer Darstellung eine erfindungsgemäße Versorgungsanlage 10 dargestellt, die im wesentlichen einen Dieselmotor 12, einen Verdichter 14 sowie einen Generator 16 umfaßt. Die Abtriebswelle des Dieselmotors 12 betätigt zum einen ein stufenloses Getriebe in Form eines mechanischen Wandlers 18 nach dem PIVPrinzip und zum anderen ein Schaltgetriebe 20, das über einen Freilauf 22 mit einer Lastschaltkupplung 24 verbunden ist, die ihrerseits über ein Zahnradgetriebe 26 den Kompressor 14 betätigt. Dabei kann das Schaltgetriebe durch ein anderes geeignetes Getriebe ausgetauscht werden. Ferner kann die Lastschaltkupplung 24 und das Schaltgetriebe 20 oder ein entsprechendes Getriebe untereinander ausgetauscht werden.

Der mechanische Wandler 18, dessen Abtriebswelle den Generator 16 betätigt, ist nun so ausgebildet, daß über eine Regeleinheit, zum Beispiel durch hydraulische Anpressung der Scheiben, sichergestellt ist, daß auch bei wechselnder Drehzahl des Dieselmotors 12 die Frequenz des Generators 16 konstant gehalten wird. Selbstverständlich kann auch der mechanische Wandler 18 durch einen hydrostatischen oder hydrodynamischen Wandler ersetzt werden.

Mittels des Schaltgetriebes 20 kann zum Beispiel bei Stillstand des Motors über einen Hebel 28 wahlweise der Kompressor 14 zugeschaltet werden und mittels Kupplung 24 im Stillstand und Betrieb, nämlich dann, wenn pulsations- und ölfreie Druckluft benötigt wird. In diesem Fall kann die Drehzahl des Motors 12 erhöht werden. Die Erhöhung der Motordrehzahl bewirkt jedoch nicht, daß sich die Frequenz des Generators 16 ändert, da in diesem Fall das Übersetzungsverhältnis des Getriebes 18 entsprechend verkleinert wird. Dies erfolgt so lange, bis der Kompressor 14

2

seine Nenndrehzahl erreicht hat. Die Ausregelung bzw. das Konstanthalten der Generatorfrequenz wird mittels des Motordrehzahlreglers erzielt, welcher vorzugsweise elektronisch/elektromechanisch ausgelegt ist und auch auf Drehzahländerungen des Generators reagiert.

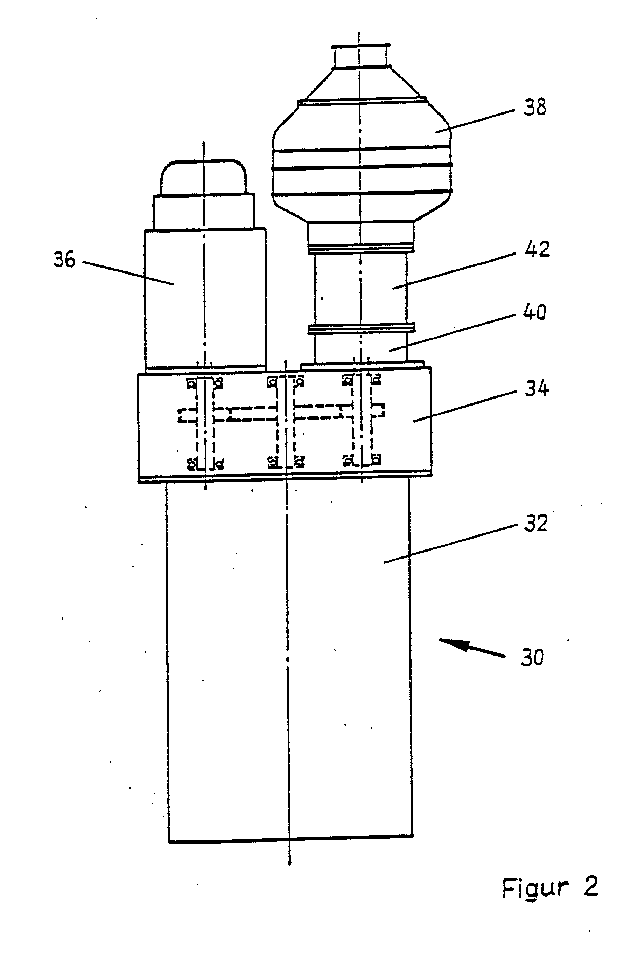

In Fig. 2 ist eine alternative Ausführungsform einer erfindungsgemäßen Versorgungsanlage 30 dargestellt, die gleichfalls einen Dieselmotor 32 umfaßt, dem ein Verteilergetriebe 34 vorzugsweise in Form eines Zahnradgetriebes nachgeschaltet ist, deren Abtriebswellen einen Generator 36 und einen Kompressor 38 antreiben. Dabei ist der Kompressor 38 gleichfalls ein Radial- und/oder Axialverdichter wie der Kompressor 14 nach Fig. 1. Dem Zahnradgetriebe ist in der Ausführungsform nach Fig. 2 eine Flüssigkeitskupplung 40 nachgeschaltet, um über ein Planetengetriebe 42 den Kraftfluß von der Abtriebswelle des Zahnradgetriebes 34 auf den Verdichter 38 zu ermöglichen. Auch in dieser Ausführungsform kann zum Beispiel mittels der Flüssigkeitskupplung, die nach dem Föttinger-Prinzip arbeitet, die Drehzahl des Kompressors 38 unabhängig von der Drehzahl des Generators 36 gesteuert werden. Alternativ dazu kann dem Verteilergetriebe 34 ein stufenloses Getriebe nachgeschaltet werden, dessen Abtriebswelle mit dem Generator 36 verbunden ist, um so gleichfalls die Drehzahl des Generators unabhängig von der Drehzahl des Kompressors 38 einzustellen. Auch sei darauf hingewiesen, daß mittels der Flüssigkeitskupplung 40 der Kompressor 38 wahlweise zu- bzw. abgeschaltet werden kann.

Mit den erfindungsgemäßen Luft- und Raumfahrt-Versorgungsanlagen 10 und 30 werden erstmals Startluft-/Bordstromversorgungsanlagen zur Verfügung gestellt, die kompakt und mobil ausgebildet sind und dabei im Vergleich zu den herkömmlichen Geräten ein erheblich kleineres Gewicht aufweisen. So kann bei einer erfindungsgemäßen Anlage für eine Leistung von 90 KVA und einen Druckluftdurchsatz von 50 m$^3$ pro Minute bei 3 bar ein Gewicht von ca. 1,5 Tonnen ausreichen, wohingegen bei herkömmlichen mit einem Dieselmotor betätigten Startgeräten ein Gewicht von 5 Tonnen vorliegt, mit denen jedoch nur Druckluft erzeugt werden kann. Ein gleiches Gewicht haben Bordstromversorgungsanlagen.

**Patentansprüche**

1. Luft- und Raumfahrt-Versorgungsanlage (10, 30) zur wahlweisen Verfügungstellung von Druckluft zur Verwendung als Startluft und gegebenenfalls elektrischer Energie, wobei die Druckluft mittels zumindest eines von einem Verbrennungsmotor (12, 32) betätigten Verdichters (14, 38) erzeugbar ist, dadurch gekennzeichnet, daß der Motor ein Dieselmotor (12, 32) ist, durch den ein Generator und wahlweise der als Radial- oder Axialverdichter ausgebildete Verdichter (14, 38) antreibbar ist, wobei die Drehzahl des Generators unabhängig von der des Verdichters einstellbar ist.

2. Luft- und Raumfahrt-Versorgungsanlage nach Anspruch 1, dadurch gekennzeichnet, daß der Abtriebswelle des Motors (12, 32) ein Verteilergetriebe (18, 20, 34) nachgeschaltet ist, von dem zumindest zwei Abtriebswellen ausgehen, die zum einen den Generator (16, 36) und zum anderen wahlweise den Verdichter (14, 38) antreiben.

3. Luft- und Raumfahrt-Versorgungsanlage nach Anspruch 1, dadurch gekennzeichnet, daß der Generator (16) über ein stufenloses Getriebe (18) antreibbar ist.

4. Luft- und Raumfahrt-Versorgungsanlage nach Anspruch 1, dadurch gekennzeichnet, daß der Kraftfluß zwischen dem Motor (12) und dem Generator (16) oder dem Verdichter (14) über einen mechanischen Wandler (18) wie zum Beispiel ein PIV-Getriebe erfolgt.

5. Luft- und Raumfahrt-Versorgungsanlage nach Anspruch 1, dadurch gekennzeichnet, daß der Kraftfluß zwischen dem Motor (12) und dem Verdichter (14) vorzugsweise über ein Schaltgetriebe und eine Lastschaltkupplung (24) erfolgt.

6. Luft- und Raumfahrt-Versorgungsanlage nach Anspruch 5, dadurch gekennzeichnet, daß zwischen dem Schaltgetriebe (20) und der Lastschaltkupplung (24) ein Freilauf (22) angeordnet ist.

7. Luft- und Raumfahrt-Versorgungsanlage nach Anspruch 6, dadurch gekennzeichnet, daß dem Verdichter (14) ein Zahnradgetriebe wie zum Beispiel ein Stirnrad- oder Planetengetriebe vorgeschaltet ist.

8. Luft- und Raumfahrt-Versorgungsanlage nach Anspruch 3, dadurch gekennzeichnet, daß der mechanische Wandler (18) selbstregelnd ausgebildet ist und durch einen hydrodynamischen oder hydrostatischen Wandler austauschbar ist.

9. Luft- und Raumfahrt-Versorgungsanlage nach Anspruch 1, dadurch gekennzeichnet, daß der Motor (12, 32) eine die Frequenz am Generator (16, 36) konstant haltende Drehzahlregelautomatik aufweist.

10. Luft- und Raumfahrt-Versorgungsanlage nach Anspruch 9, dadurch gekennzeichnet, daß bei Zuschalten des Verdichters (14, 38) bis zur Erreichung seiner Nenndrehzahl eine kontinuierliche Änderung des Übersetzungsverhältnisses Generator — Getriebe (18) erfolgt.

11. Luft- und Raumfahrt-Versorgungsanlage (10, 30) zur wahlweisen Verfügungstellung von Druckluft zur Verwendung als Startluft und gegebenenfalls elektrischer Energie, wobei die Druckluft mittels zumindest eines von einem Verbrennungsmotor (12, 32) betätigten Verdichters (14, 38) erzeugbar ist, dadurch gekennzeichnet, daß der Motor (12) ein Dieselmotor ist, dessen Abtriebswelle zum einen ein stufenloses Getriebe wie einen mechanischen Wandler (18) nach zum Beispiel dem PIV-Prinzip, dessen Abtriebswelle an einen Generator (16) angeschlossen, und zum anderen ein zuschaltbares (zweites) Getriebe (20) wie zum Beispiel ein Schaltgetriebe betätigt, das den als Radialund/oder Axialverdichter (14) ausgebildeten bei konstanter Drehzahl des Generators in seiner Drehzahl veränderbaren Verdichter betätigt.

12. Luft- und Raumfahrt-Versorgungsanlage (10, 30) zur wahlweisen Verfügungstellung von Druckluft zur Verwendung als Startluft und gegebenenfalls elektrischer Energie, wobei die Druckluft mittels zumindest eines von einem Verbrennungsmotor (12, 32) betätigten Verdichters (14, 38) erzeugbar ist, dadurch gekennzeichnet, daß der Motor (32) ein Dieselmotor mit angeflanschtem Zahnradgetriebe (34) ist, von dem zwei Abtriebswellen ausgehen, von denen eine einen Generator (36) und die andere den Verdichter (38) antreibt, daß der Verdichter zu- und abschaltbar und als Radial- und/oder Axialverdichter ausgebildet ist, daß die Drehzahl des Verdichters unabhängig von der Drehzahl des Generators veränderbar ist und daß der Kraftfluß vom Zahnradgetriebe über eine nach dem Föttinger-Prinzip arbeitende Kupplung (40) und ein Zahnradgetriebe, zum Beispiel Planetengetriebe (42), zu dem Verdichter erfolgt.

## Claims

1. A supply device (10, 30) for air and space navigation, for optional supply of compressed air for use as starting air and if necessary of electrical energy, with the compressed air being generatable by at least one compressor (14, 38) operated by a combustion engine (12, 32), characterized in that the engine is a diesel engine (12, 32), by which a generator and optionally a compressor (14, 38) of radial or axial type is drivable, the speed of the generator being settable independing on the speed of the compressor.

2. A supply device for air and space navigation according to Claim 1, characterized in that the driven shaft of the engine (12, 32) is connected in front of a transfer transmission (18, 20, 34) from which at least two driven shafts extend, driving on the one hand the generator (16, 36) and on the other hand optionally the compressor (14, 38).

3. A supply device for air and space navigation according to Claim 1, characterized in that the generator (16) is drivable by an infinitely variable transmission (18).

4. A supply device for air and space navigation according to Claim 1, characterized in that the power flow between the engine (12) and the generator (16) or the compressor (14) is via a mechanical converter (18), such as a PIV transmission, for example.

5. A supply device for air and space navigation according to Claim 1, characterized in that the power flow between the engine (12) and the compressor (14) is preferably via a transmission and a load clutch (24).

6. A supply device for air and space navigation according to Claim 5, characterized in that a freewheel (22) is arranged between the transmission (20) and the load clutch (24).

7. A supply device for air and space navigation according to Claim 6, characterized in that a gear train, such as for example a cylindrical gear or planetary gear, is connected in front of the compressor (14).

8. A supply device for air and space navigation according to Claim 3, characterized in that the mechanical converter (18) is of the self-regulating type and is interchangeable with a hydrodynamic or hydrostatic converter.

9. A supply device for air and space navigation according to Claim 1, characterized in that the engine (12, 32) has an automatic speed control unit keeping the frequency at the generator (16, 36) constant.

10. A supply device for air and space navigation according to Claim 9, characterized in that the transmission ratio between generator and transmission (18) changes continuously when the compressor (14, 38) is operated until said compressor has reached rated speed.

11. A supply device for air and space navigation (10, 30) for optional supply of compressed air for use as starting air and if necessary of electrical energy, with the compressed air being generatable by at least one compressor (14, 38) operated by a combustion engine, characterized in that the engine (12) is a diesel engine whose driven shaft on the one hand operates an infinitely variable transmission such as a mechanical converter (18) to the PIV principle, for example, the driven shaft of said converter being connected to a generator (16), and on the other hand operates a connectable (second) transmission (20), such as for example a transmission that operates the compressor which is of radial and/or axial type (14) and is variable in speed when the generator speed is constant.

12. A supply device for air and space navigation (10, 30) for optional supply of compressed air for use as starting air and if necessary of electrical energy, with the compressed air being generatable by at least one compressor (14, 38) operated by a combustion engine, characterized in that the engine (32) is a diesel engine with flange-mounted gear train (34) from which two driven shafts extend, one of which drives a generator (36) and the other the compressor (38), in that the compressor can be switched on and off and is of radial and/or axial type, in that the speed of the compressor is variable regardless of the speed of the generator, and in that the power flow from the gear train to the compressor is via a clutch (40) operating to the Föttinger principle and via a gear train, for example a planetary gear (42).

## Revendications

1. Dispositif d'alimentation pour la navigation aérienne et spatiale (10, 30) destiné à la fourniture, soit d'air comprimé à utiliser comme air de démarrage, soit le cas échéant, d'énergie électrique, l'air comprimé pouvant être produit à l'aide d'un compresseur (14, 38) actionné au minimum par un moteur de combustion (12, 32), caractérisé par le fait que le moteur est un moteur diesel (12, 32) par lequel, soit un générateur, soit le compresseur (14, 38) conçu comme compresseur radial ou axial peut être entraîné, la vitesse de rotation du générateur étant réglable indépendamment de celle du compresseur.

2. Dispositif d'alimentation pour la navigation aérienne d'après la revendication 1, caractérisé par le fait qu'un engrenage distributeur (18, 20, 34) est monté en aval de l'arbre de sortie du moteur (12, 32), engrenage duquel partent au minimum deux arbres de sortie qui entraînent, soit le générateur (16, 36), soit le compresseur (14, 38).

3. Dispositif d'alimentation pour la navigation aérienne et spatiale d'après la revendication 1, caractérisé par le fait que le générateur (16) peut être actionné par un réducteur à réglage continu (18).

4. Dispositif d'alimentation pour la navigation aérienne et spatiale d'après la revendication 1, caractérisé par le fait que la transmission du mouvement entre le moteur (12) et le générateur (16) ou le compresseur (14) est assurée par un convertisseur mécanique (18), par exemple un engrenage PIV.

5. Dispositif d'alimentation pour la navigation aérienne et spatiale d'après la revendication 1, caractérisé par le fait que la transmission du mouvement entre le moteur (12) et le compresseur (14) est assurée de préférence par une boîte de vitesses et un embrayage sous charge (24).

6. Dispositif d'alimentation pour la navigation aérienne et spatiale d'après la revendication n° 5 caractérisé par le fait qu'une course libre (22) est disposée entre la boîte de vitesses (20) et l'embrayage sous charge (24).

7. Dispositif d'alimentation pour la navigation aérienne et spatiale d'après la revendication n° 6, caractérisé par le fait qu'un engrenage, par exemple un engrenage droit ou un engrenage planétaire, est prévu en amont du compresseur (14).

8. Dispositif d'alimentation pour la navigation aérienne et spatiale d'après la revendication n° 3, caractérisé par le fait que le convertisseur mécanique (18) est conçu avec autoréglage et peut être remplacé par un convertisseur hydrodynamique ou hydrostatique.

9. Dispositif d'alimentation pour la navigation aérienne et spatiale d'après la revendication n° 1, caractérisé par le fait que le moteur (12, 32) présente un régulateur de vitesse automatique maintenant constante la fréquence du générateur (16, 36).

10. Dispositif d'alimentation pour la navigation aérienne et spatiale d'après la revendication n° 9, caractérisé par le fait que, de la mise en circuit du compresseur (14, 38) à l'obtention de sa vitesse nominale, une variation continue du rapport de réduction générateur — réducteur (18) a lieu.

11. Dispositif d'alimentation pour la navigation aérienne et spatiale (10, 30) destiné à la fourniture, soit d'air comprimé à utiliser comme air de démarrage, soit, le cas échéant, d'énergie électrique, l'air comprimé pouvant être produit à l'aide d'un compresseur (14, 38) actionné au minimum par un moteur de combustion (12, 32), caractérisé par le fait que le moteur (12) est un moteur diesel dont l'arbre de sortie actionne d'une part un réducteur à réglage continu, par exemple un convertisseur mécanique (18) selon le principe PIV, dont l'arbre de sortie est raccordé à un générateur (16) et, d'autre part, un (deuxième) réducteur ajoutable, par exemple une boîte de vitesses qui actionne le compresseur conçu comme compresseur radial et/ou axial (14), dont la vitesse peut être modifiée alors que celle du générateur demeure constante.

12. Dispositif d'alimentation pour la navigation aérienne et spatiale (10, 30) pour la fourniture, soit d'air comprimé à utiliser comme air de démarrage, soit, le cas échéant, d'énergie électrique, l'air comprimé pouvant être produit à l'aide d'un compresseur (14, 38) actionné au minimum par un moteur de combustion (12, 32) caractérisé par le fait que le moteur (32) est un moteur diesel avec engrenage (34) fixé par bride duquel partent deux arbres de sortie dont l'un actionne un générateur (36) et l'autre le compresseur (38), que le compresseur peut être mis en et hors circuit et est conçu comme compresseur radial et/ou axial, que la vitesse de rotation du compresseur peut varier indépendamment de la vitesse de rotation du générateur et que la transmission du mouvement de l'engrenage au compresseur est assuré par un embrayage (40) travaillant selon le principe Föttinger, et un engrenage, par exemple un engrenage planétaire (42).

Figur 1

Figur 2